# EUROPÄISCHE PATENTSCHRIFT

(11) **EP 0 804 064 B1**
(45) Veröffentlichungstag und Bekanntmachung des Hinweises auf die Patenterteilung: **24.03.1999**
(21) Anmeldenummer: 96900250.0
(22) Anmeldetag: 05.01.1996
(51) Int. Cl.: A01G 25/09, A01G 25/14, A47K 3/22

(54) **BEHÄLTNIS ZUM SPEICHERN, TRANSPORTIEREN UND AUSBRINGEN VON FLÜSSIGKEIT, INSBESONDERE GIESSWASSER ODER TRINKWASSER**
CONTAINER FOR STORING, TRANSPORTING AND DISPENSING LIQUID, ESPECIALLY WATER FOR DRINKING OR WATERING
RECIPIENT POUR STOCKER, TRANSPORTER ET DISTRIBUER DU LIQUIDE, NOTAMMENT DE L'EAU POTABLE OU DE L'EAU D'ARROSAGE

(30) Priorität: 18.01.1995 DE 29500710 U; 19.07.1995 DE 29511629 U
(43) Veröffentlichungstag der Anmeldung: 05.11.1997
(73) Patentinhaber: Prieschl, Herbert, 74626 Bretzfeld (DE); Wecker, Jürgen, 74626 Bretzfeld (DE)
(72) Erfinder: Prieschl, Herbert, 74626 Bretzfeld (DE); Wecker, Jürgen, 74626 Bretzfeld (DE)
(74) Vertreter: Clemens, Gerhard, Dr.-Ing.
(86) Internationale Anmeldenummer: DE9600009
(87) Internationale Veröffentlichungsnummer: WO9622013

(56) Entgegenhaltungen:
- DE-A- 2 404 341
- DE-A- 2 851 793
- DE-U- 8 901 123
- DE-U- 9 104 697
- DE-U-29 500 710
- FR-A- 1 453 606
- FR-A- 2 197 510
- US-A- 4 269 329
- US-A- 5 111 538
- MEIN SCHÖNER GARTEN, Bd. 24, Nr. 12, 24.November 1995 DE, Seite 26 'Neues fürs Garten'

## Beschreibung

### TECHNISCHES GEBIET

Die vorliegende Erfindung betrifft ein Behältnis zum Speichern, Transportieren und Ausbringen von Flüssigkeit, insbesondere Gießwasser oder Trinkwasser, mit einer Hohlkörpereinheit, unterseitig an der Hohlkörpereinheit vorhandenen Fahrzeugrollen, einer Einlaßöffnung, einer Auslaßöffnung und einer Handhabe zum rollenden Ziehen des Behältnis.

### STAND DER TECHNIK

Das Gießen in den normalen Gießkannen mit zum Beispiel 10 oder 15 l (Liter) Inhalt erfordert einen relativ hohen Kraftaufwand und ist sehr beschwerlich. Für schwache oder ältere Menschen ist dies oft eine kaum zu lösende Aufgabe, insbesondere dann, wenn die Wasserstelle vom Einsatzort weit entfernt ist. Diese Aufgabe ist vielfältig anzutreffen, zum Beispiel im häuslichen Gartenbereich, in Schrebergärten, auf Friedhöfen, aber auch im landwirtschaftlichen oder gärtnerischen Bereich.

In dem deutschen Gebrauchsmuster G 91 04 697.1 ist eine Gießkanne beschrieben, die sich dadurch auszeichnet, daß Fahrrollen vorhanden sind, die in dem Kannenausguß gegenüberliegenden Endbereich der Kannenunterkörperseite angeordnet sind und der Kannenausguß verlängert als Betätigungshebel ausgebildet ist. Durch diese Maßnahme wird die Handhabung bzw. der Transport der Gießkanne verbessert. Jedoch bleibt das Problem, daß die Gießkanne zum Gießen angehoben werden muß, so daß auch hier beim Gießvorgang selbst ein erhöhter Kraftaufwand erforderlich ist. Darüber hinaus ist der Kannenausguß relativ lang gestaltet, so daß dieser beim Gießen entweder abgenommen werden muß oder infolge seiner Länge beim Gießen hinderlich ist.

### DARSTELLUNG DER ERFINDUNG

Der vorliegenden Erfindung liegt das technische Problem bzw. die Aufgabe zugrunde, ein gegenüber dem genannten Stand der Technik verbessertes Behältnis der eingangs genannten Art anzugeben, das einen einfachen Aufbau aufweist, einen leichten Transport gewährleistet und das Gießen oder Wasserentnehmen leicht und effektiv gestaltet.

Das erfindungsgemäße Behältnis ist durch die Merkmale des unabhängigen Anspruchs 1 gegeben. Vorteilhafte Ausgestaltungen und Weiterbildungen sind Gegenstand der abhängigen Ansprüche.

Das erfindungsgemäße Behältnis zum Speichern, Transportieren und Ausbringen von Flüssigkeit zeichnet sich demgemäß dadurch aus, daß außenseitig an dem Behältnis eine Solarzelleneinrichtung angeordnet ist, eine Flüssigkeitspumpeneinrichtung vorhanden ist zum bedarfsweise Abpumpen oder Ansaugen der im Inneren der Hohlkörpereinheit gespeicherten bzw. zu speichernden Flüssigkeit und die Solarzelleneinrichtung ihre erzeugte elektrische Leistung zumindest teilweise an die Flüssigkeitspumpeneinrichtung abgibt.

Bevorzugt wird für das Behältnis ein leichter Kunststoffbehälter eingesetzt, wobei auf eine besondere Leichtgängigkeit der Räder zu achten ist. Dadurch kann die Flüssigkeit (Wasser) mit geringem Kraftaufwand transportiert werden. Gleichzeitig wird das Tragen der schweren Flüssigkeitslast sowohl beim Transportvorgang als auch beim Gießvorgang umgangen und der Körper wird durch den Wegfall der einseitigen Belastung geschont.

Eine besonders bevorzugte Ausgestaltung des erfindungsgemäßen Behältnis zeichnet sich dadurch aus, daß im Einlaßbereich ein bis zu einem Anschlag aus der Hohlkörpereinheit herausziehbarer flexibler Schlauch vorhanden ist. Dadurch wird eine leichte Befüllung ermöglicht. Der flexible Schlauch wird aus dem Behälter herausgezogen und kann zum Befüllen leicht an die Wasserstelle bzw. den Wasserhahn herangeführt werden. In einer weiteren Ausgestaltung ist im Schlauch ein herausnehmbares Sieb angebracht, damit Schwimmstoffe ferngehalten werden.

Die Hohlkörpereinheit weist ein Volumen im Bereich von 20 bis 40 l (Liter), insbesondere ca. 35 l (Liter) auf.

Eine besonders flexible Ausgestaltung des erfindungsgemäßen Behältnis zeichnet sich dadurch aus, daß das Behältnis einen Tragegriff und diametral zu dem Tragegriff angeordnete Gießausnehmungen, insbesondere im Eckbereich der Handhabe, vorhanden sind, so daß das Behältnis wie eine Gießkanne zum Gießen benutzt werden kann.

Als Solarzelleneinrichtung werden Solarzellen der handelsüblichen Art eingesetzt, die den notwendigen und ausreichenden Strom für die eingebaute Flüssigkeitspumpeneinrichtung liefern. Der Strom wird über eingebaute Kabel direkt zur Pumpe geliefert. Die Pumpe kann als Druckpumpe oder als Saugpumpe ausgebildet sein. Eine Druckpumpe wird eingesetzt, wenn die Flüssigkeit zum Gießen bzw. zum Entnehmen verwendet wird. Eine zusätzliche Saugpumpe wird eingesetzt, falls Wasser von einer Entnahmestelle angesaugt werden muß.

Eine besonders bevorzugte Ausgestaltung des erfindungsgemäßen Behältnis zeichnet sich dadurch aus, daß die Solarzelleneinrichtung ihre elektrische Leistung an eine Stromspeichereinheit abgibt, an die die Flüssigkeitspumpeneinrichtung angeschlossen ist. Dadurch steht jederzeit eine ausreichende Menge an elektrischer Energie zur Verfügung, die im Bedarfsfalle beispielsweise durch Betätigung einer einfachen Schaltereinrichtung angefordert werden kann.

Durch Zusatzausstattungen ist das erfindungsgemäße Behältnis noch vielseitig neben dem Garten- und Friedhofsbereich auch im Freizeitbereich und zur Sicherung der Trinkwasserversorgung einsetzbar. So ist es möglich, mittels einer entsprechenden Haltevorrichtung eine Duschvorrichtung anzuschließen oder ein Aggregat zur Kühlung des Behälterinhaltes über die Solarzelleneinrichtung mit Strom zu versorgen, damit die Möglichkeit zur Trinkwasserversorgung beispielsweise in der dritten Welt möglich ist. Darüber hinaus kann auch wie bereits oben erwähnt der Einsatz einer solarbetriebenen Saugpumpe vorgesehen werden, damit der Behälter auch zum Beispiel aus Trögen oder Wasserläufen gefüllt werden kann.

Ebenso können in der Hohlkörpereinheit Vorrichtungen zur Mischung des Behälterinhaltes vorgesehen werden, die von der Solarzelleneinrichtung mit Strom versorgt werden, damit auch ein aus verschiedenen Komponenten bestehender Behälterinhalt homogen vermischt werden kann.

Eine bevorzugte Ausgestaltung des erfindungsgemäßen Behältnisses zeichnet sich dadurch aus, daß die Flüssigkeitspumpeneinrichtung eine erste Flüssigkeitspumpeneinheit zum Abpumpen und eine zweite Flüssigkeitspumpeneinheit zum Ansaugen aufweist, wobei sich eine weitere Ausgestaltung dadurch auszeichnet, daß die erste Flüssigkeitspumpeneinheit in oder am Gehäuse und die zweite Flüssigkeitspumpeneinheit im Bereich des freien Endes eines flexiblen, mit dem Inneren des Gehäuses kommunizierenden Schlauches angeordnet ist.

Bevorzugt sind die Flüssigkeitspumpeneinheiten jeweils als eine Kreiselpumpe ausgebildet. Das Anordnen von jeweils einer Kreiselpumpe für das Pumpen und einer zweiten Kreiselpumpe für das Saugen bringt eine dauerhaft zuverlässige Funktion im Hinblick auf die durch die Sonnenenergie gewonnene Antriebsenergie beziehungsweise die dadurch umzusetzende Stromstärke. Die erste Kreiselpumpe zum Entleeren des Behälters befindet sich im Behälter selbst und ist so gestellt, daß der Pumpenkreisel den Behälter entleert. Bei diesem Vorgang wird das Wasser aus dem Behälter durch die Kreiselpumpe in einen Entleerungsschlauch gedrückt. Die zweite Kreiselpumpe zum Befüllen des Behälters sitzt am freien Endbereich des flexiblen Entleerungsschlauchs und ist so eingebaut, daß durch die Kreiselpumpenbewegung das Wasser angesaugt und in den Behäl-ter gedrückt wird. Beide Pumpen sind so konstruiert, daß beim Entleerungsvorgang das Wasser durch die saugende Pumpe ohne Widerstand hindurchströmen kann. Beim Saugbetrieb wird das Wasser dann durch die abpumpende Pumpe ebenfalls ohne Widerstand durchgedrückt und gelangt so in den Behälter. Durch die Verwendung von zwei Kreiselpumpen ist es möglich, von einer Pumpe die Flüssigkeit durch die andere, ohne zusätzlichen Kraftaufwand zu pumpen.

Eine besonders bevorzugte Ausgestaltung des erfindungsgemäßen Behältnisses zeichnet sich dadurch aus, daß im Bereich des freien Endes eines mit dem Inneren des Gehäuses kommunizierenden Schlauches eine Neigungsschalteinheit vorhanden ist, wobei die Flüssigkeitspumpeneinrichtung beziehungsweise die Flüssigkeitspumpeneinheiten in Abhängigkeit der Neigung der Neigungsschalteinheit schaltbar sind.

Bevorzugt ist der Endbereich des Schlauches als Sprühkopf ausgebildet, in dem die Neigungsschalteinheit angebracht ist. Die Neigungsschalteinheit wird hierbei so angeordnet, daß sich der Stromkreis zum Betreiben beispielsweise der ersten Flüssigkeitspumpeneinheit erst dann schließt, wenn der Sprühkopf von der senkrechten beziehungsweise aus der waagerechten Lage nach unten geneigt wird. Erst dann wird der Stromkreis geschlossen und der Pumpenbetrieb kann laufen. Dabei wird zuverlässig verhindert, daß durch ungewolltes Inbetriebsetzen durch einen Hauptschalter am Gehäuse auf Startstellung sich der Behälter entleert, ohne daß dies gewünscht wird. Sofern der Sprühkopf ordnungsgemäß am Behälter angebracht ist, ist eine Entleerung nicht möglich.

In der Regel wird somit die abpumpende Pumpe immer dann geschaltet, wenn der Sprühkopf nach unten zeigt.

Insbesondere wird damit eine vorteilhafte Bedienung des Behältnisses als solches gewährleistet, da beim Sprühen oder Gießen beispielsweise von Pflanzen dieser Vorgang nicht mit dem Hauptschalter am Gehäuse unterbrochen werden muß, sondern das Ausbringen von Wasser von der Neigung der Neigungsschaltereinheit bestimmt wird. Neigt man diese nach unten, wird das Wasser ausgebracht und richtet man diese nach oben, d. h. über die Waagerechte hinaus, dann wird durch den Neigungsschalter der Stromkreis unterbrochen und die Pumpe setzt aus. Dies ist sehr vorteilhaft und angenehm, da damit leicht der Sprüh- oder Gießvorgang unterbrochen werden kann. Auch muß man sich nicht zum Gießen in engem Abstand vom Behältnis befinden.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Seitenansicht eines Behältnisses mit flexiblem Einfüllschlauch und flexiblem Auslaßschlauch mit einer Druckpumpe,
- Fig. 2: Seitenansicht des Behältnis gemäß Figur 1 ohne die flexiblen Schläuche,
- Fig. 3: Vorderansicht des Behältnis gemäß Figur 2,

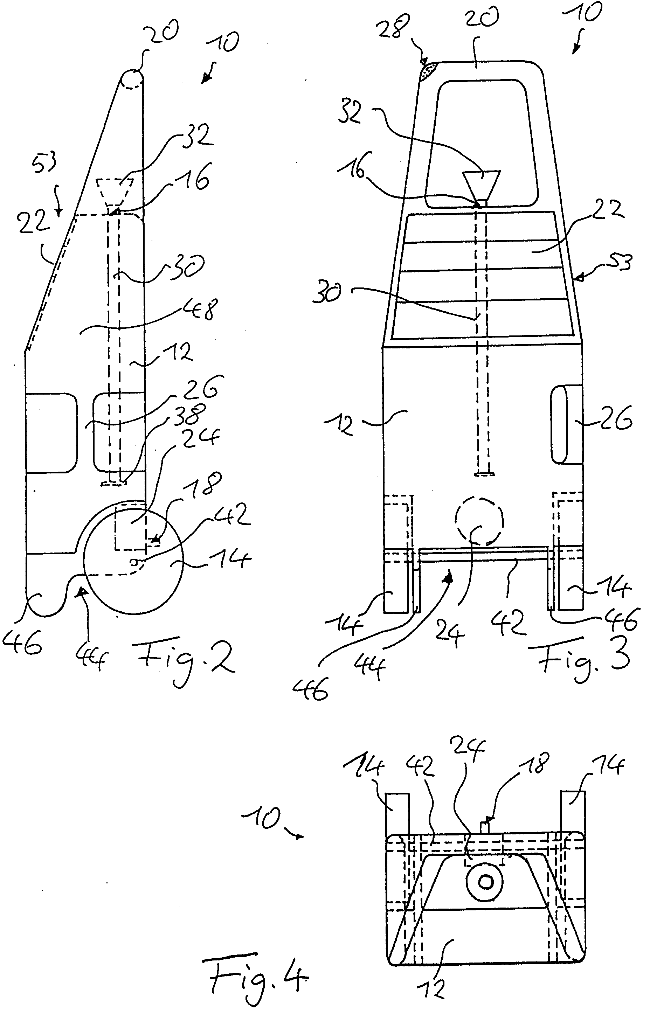

- Fig. 4: Draufsicht auf das Behältnis gemäß Figur 2,
- Fig. 5: schematische Ansicht eines Behältnis mit angeschlossener Duschvorrichtung,
- Fig. 6: schematische Ansicht des Einsatzes eines Behältnis gemäß Figur 2 als Gießkanne,

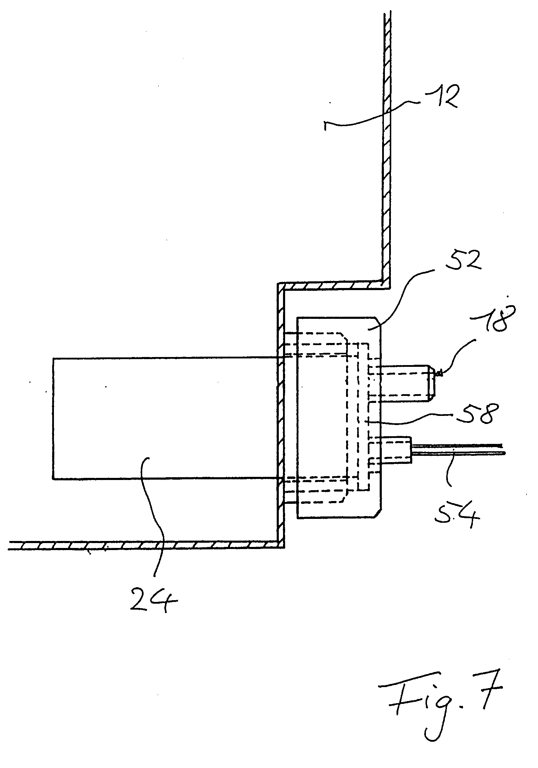

- Fig. 7: schematische Detailansicht im Anschlußbereich der Druckpumpe und
- Fig. 8: schematische Seitenansicht eines Behältnis mit zwei Flüssigkeitspumpeneinheiten.

### WEGE ZUM AUSFÜHREN DER ERFINDUNG

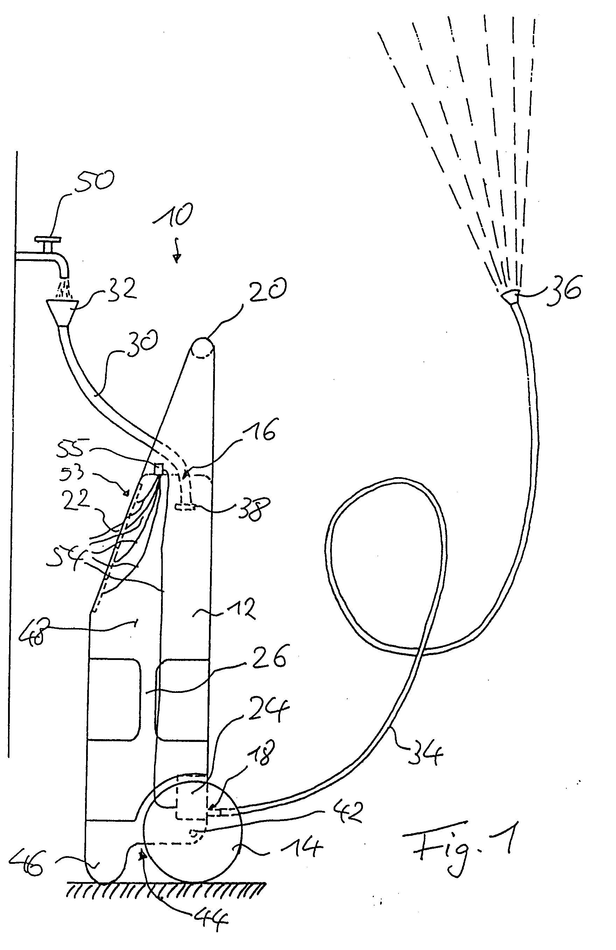

In Figur 1 ist schematisch ein Behältnis 10 zum Speichern, Transportieren und Ausbringen von Flüssigkeit, insbesondere Gießwasser, dargestellt. Das Behältnis 10 weist eine Hohlkörpereinheit 12 auf, die im Prinzip quaderförmig ausgebildet ist und einen nach oben sich linear verjüngenden Querschnittsbereich aufweist. An die Hohlkörpereinheit 12 ist eine Handhabe 20 angeformt, die so ausgebildet ist, daß im oberen Bereich ein Handgriff entsteht, der in ergonomisch richtiger Höhe für den Durchschnittsmenschen angeordnet ist. Das Behältnis 10 ist insgesamt so ausgebildet, daß der Schwerpunkt des gefüllten Behältnis 10 relativ weit unten liegt, damit ein leichter Transport und eine gute Standsicherheit möglich ist. Auf der Unterseite 44 des Behältnis 10 sind parallel beabstandet im Seitenbereich zwei Fahrzeugrollen 14 um eine gemeinsame Drehachse 42 drehbar angeordnet. Diese Fahrzeugrollen 14 dienen zum Transport des Behältnis 10. Die Fahrzeugrollen sind leichtgängig und können insbesondere aus Vollgummi im Laufbereich bestehen. Das Behältnis 10 ist unterseitig so ausgeformt, daß zwei beabstandet zueinander angeordnete Vorsprungseinheiten 46 vorhanden sind, so daß das Behältnis 10 in der in Figur 1 dargestellten senkrechten Form sicher abgestellt werden kann, dadurch, daß es sich einerseits auf die Vorsprungseinheiten 46 und die beabstandet zur Vorsprungseinheit vorhandenen Fahrzeugrollen 14 abstützen kann. Die Vorsprungseinheiten 46 und die Fahrzeugrollen 14 sind dabei so beabstandet angeordnet, daß das gefüllte Behältnis sehr standsicher steht. Die Vorsprungseinheiten 46 sind an die Unterseite 44 des Behältnis 12 einstückig angeformt.

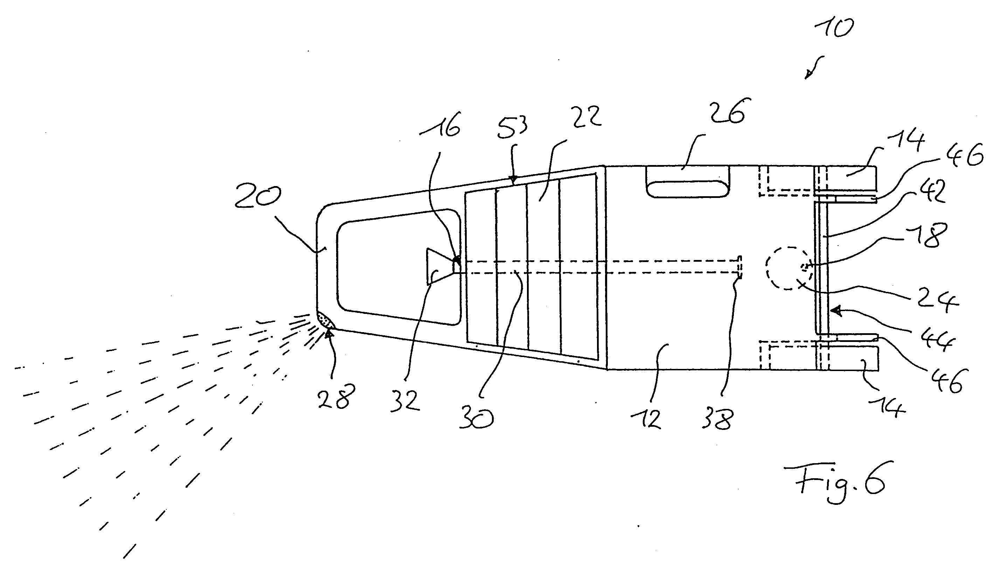

Das Behältnis 10 ist an einer Seitenwandung 48 so ausgeformt, daß ein Tragegriff 26 entsteht. Damit kann das Behältnis 10 mit einer Hand der Bedienperson aus der Senkrechten in die horizontale Lage gebracht werden und ist somit leicht tragbar. Gemäß Figur 6 ist an der dem Tragegriff diametral gegenüberliegenden Seite am oberen Ende des Behältnis 10, d. h. im Eckbereich der Handhabe 20, eine Ausgießöffnung mit Gießausnehmungen 28 angebracht, so daß das Behältnis 10 auch manuell wie eine normale Gießkanne entleert werden kann.

Zur Befüllung des Behältnis 10 ist unterhalb der Handhabe 20 in der Behältermitte im Bereich einer Einlaßöffnung 16 ein flexibler Schlauch 30 montiert, der an seinem einen Ende mit einem Trichter 32, einem nicht näher dargestellten Filtersieb und an seinem anderen Ende mit einem Anschlag 38 versehen ist. Dadurch kann zur Befüllung des Behältnis 10 der Schlauch 30 über einen nicht dargestellten Führungsring aus dem Behältnis 10 bis zum Anschlag 38 herausgezogen werden. Zum Befüllen ist das Behältnis 10 neben einer Wasserstelle 50, die in Figur 1 als Wasserhahn schematisch dargestellt ist, abzustellen, so daß dann mit dem Schlauch 30 und dem festmontierten Trichter 32 das Behältnis 10 mit Wasser gefüllt werden kann. Das nicht dargestellte eingebaute Sieb ist leicht herausnehmbar ausgebildet und kann von Schwimmstoffen gereinigt werden. Der in der Hohlkörpereinheit 12 im nicht benötigten Zustand vorhandene Schlauch 30 ermöglicht, daß keine außenanliegende extra Aufbewahrungshalterung für den Schlauch angebracht werden muß. Dabei ist der Schlauch so ausgebildet, daß der Schlauch 30 aus dem Behältnis 10 durch das Verbiegen des Anschlags auch insgesamt herausgenommen und erneuert werden kann.

Das Behältnis 10 selbst wird bevorzugt als Kunststoffbehälter hergestellt, so daß ein kostengünstiges Herstellungsverfahren im Spritzverfahren oder Blasverfahren möglich ist. Hierbei ist das Behältervolumen so ausgelegt, daß es für den jeweiligen Einsatzfall sinnvoll ist. Das Volumen kann von ca. 20 l (Liter) bis 50 l (Liter) schwanken. Auch ein Behältnis mit größerem Volumen kann problemlos konstruiert werden. In dem abgeschrägten oberen Bereich 53 des Behältnis 10 ist eine Solarzelleneinrichtung 22 außenseitig angebracht. Die Solarzelleneinrichtung 22 besteht aus einzelnen Solarzellenelementen oder Solarfolienelementen. Dabei ist die Befestigung so ausgebildet, daß sie dauerhaft ist. Die Solarzelleneinrichtung 22 wird durch einen in der Zeichnung nicht näher dargestellten umlaufenden Wulst des Behältnisses 10 vor Stößen geschützt. Die Größe der Solarzelleneinrichtung 22 und die Leistung wird so dimensioniert, daß genügend Strom zur Anwendung zur Verfügung steht.

Auf der gegenüberliegenden Seite der Solarzelleneinrichtung 22 ist im unteren Bereich des Behältnis 10 im Bereich einer Auslaßöffnung 18 eine Flüssigkeitspumpe 24 vorhanden, die als Druckpumpe ausgebildet ist.

Im Bereich der Auslaßöffnung 18 ist das Behältnis 10 so vorgefertigt, daß mit einer einfachen und wasserdichten Überwurfmutter 52 die Druckpumpe 24 in das Behältnis 10 eingeführt und festgeschraubt werden kann. Durch diese Maßnahme unterstützt durch zusätzlich dichtende Einlagen ist eine dauerhafte und zuverlässige und dichte Befestigung der Flüssigkeitspumpe möglich, wobei gleichzeitig eine einfache Demontage zu Austauschzwecken gewährleistet wird. Die Pumpe 24 wird mit in Figur 1 separat schematisch dargeführten Stromkabeln 54 über eine Schalteinheit 56 an die Solarzelleneinrichtung 22 angeschlossen.

Die Stromkabel 54 werden so am Behältnis 10 befestigt, daß die Nutzung nicht beeinträchtigt wird. Die Pumpe 24 wird von ihrer Leistung so bemessen, daß einerseits die Solarzelleneinrichtung 22 die entsprechende Leistung liefert und zum anderen der Wasserdruck ausreicht, das Behältnis 10 zu leeren und einen optimalen Einsatzdruck zu bieten. An dem außenliegenden Teil der Pumpe 24 ist ein Flansch 58 angebracht, auf dem ein flexibler Schlauch 34, der beim Entleeren der Führung der zu entleerenden Flüssigkeit dient, angebracht werden kann. Die Verbindung kann durch eine Aufsteckverbindung gewährleistet werden.

Dieser entsprechend lange flexible Schlauch 34 ist mit einer Düse 36 versehen, so daß die Flüssigkeit bequem und leicht und insbesondere auch bei Aufrechthaltung an ihrem Einsatzort, wie zum Beispiel den Garten, das Grab oder anderes herangebracht werden kann.

Die Pumpe 24 wird durch die Schaltereinheit 56, die bevorzugt als Kippschalter ausgebildet ist, und im oberen Bereich des Behältnis 10 angeordnet ist in bzw. außer Betrieb gesetzt. Auch diese Kabelverbindung wird so am Behältnis 10 verlegt, daß eine sichere Nutzung gegeben ist.

Das Behältnis 10 kann hinsichtlich seines Eigengewichts so konstruiert werden, daß es problemlos zu den jeweiligen Einsatzorten transportiert werden kann. Insbesondere der Tragegriff, der den Einsatz als "Gießkanne" ermöglicht, erlaubt es, das erfindungsgemäße Behältnis problemlos zu Zwecken seines Einsatzes an den jeweiligen Einsatzort zu transportieren.

Das erfindungsgemäße Behältnis 10 kann insbesondere auch im Freizeit- und Campingbereich als Wassertransporter eingesetzt werden. Damit kann leicht das Wasser über weite Strecken herantransportiert und gut aufbewahrt sowie auch leicht entnommen werden.

Das erfindungsgemäße Behältnis 10 ist auch zur Trinkwasserversorgung zum Beispiel in Notstandsgebieten geeignet, in denen eine dezentrale Wasserversorgung aufgebaut werden soll. Insbesondere kommt es in Flüchtlingslagern es zu großen Problemen der Wasserverteilung, da große Wassersammelfahrzeuge meist nur wenig Abgabestellen haben. In diesem Zusammenhang weist das erfindungsgemäße Behältnis 10 ein solargetriebenes Kühlaggregat auf, das über die Solarzelleneinrichtung 22 mit Strom versorgt wird und an dem Behältnis 10 eingebaut ist, so daß das Lebensmittel Trinkwasser gekühlt wird und in frischem Zustand erhalten wird.

In den Figuren tragen gleiche Bauteile das gleiche Bezugszeichen und werden nicht nochmals erläutert.

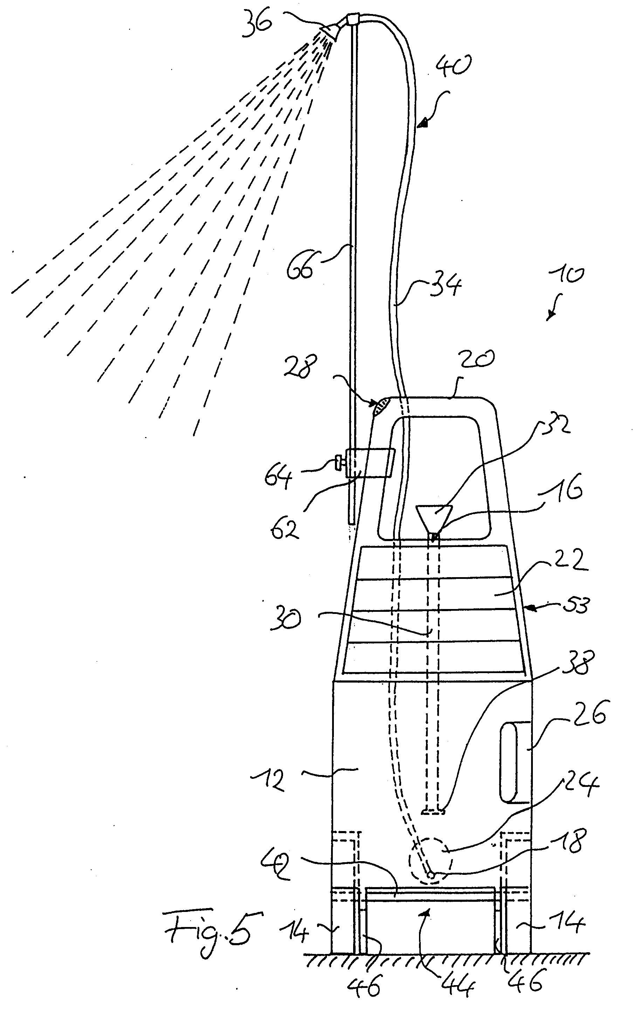

Für den Freizeitbereich ist die Umrüstung des erfindungsgemäßen Behältnis 10 in eine Duschvorrichtung 40 gemäß Figur 5 möglich, die sehr leicht zu handhaben ist. Durch eine bevorzugt konisch verlaufende Halterung 62 wird die Duschvorrichtung 40 mittels einer Feststellschraube 64 im oberen Bereich seitlich an der Handhabe 20 aufgesteckt und in ihrer Lage fixiert. Hierzu wird in die Öffnung der Feststellschraube 64 ein stabiler Stab 66 eingeführt, der im oberen Bereich eine Halterung zur Aufnahme des Schlauches 34 aufweist.

Durch Einlegen des Schlauches 34 in die Halterung 62 des Stabes 66 entsteht eine Duschvorrichtung 40, die je nach Körpergröße durch die Feststellschraube 64 eingestellt werden kann. Die Duschvorrichtung 40 kann mittels einer endseitig angeordneten Düse 36 oder mit einem normalen Gießer betrieben werden, so daß eine individuelle Einstellung möglich ist. Die solargetriebene Pumpe 24 sichert die Wasserversorgung und sorgt für den notwendigen Druck für den Duschvorgang. Durch das rechtzeitige Befüllen des Behältnis 10 und seiner Lagerung zum Beispiel im Sonnenbereich kann sich der Behälterinhalt so erwärmen, daß eine angenehme Wassertemperatur erreicht wird.

In einer nicht dargestellten Ausführungsvariante ist das Behältnis mit einer Saugpumpe ausgestattet. Dies ist zum Beispiel in dem Anwendungsbereich notwendig, wenn zum Beispiel Gartenbesitzer keinen Wasserhahn zur Verfügung haben, sondern ihr Wasser zum Beispiel aus Seen, Flüssen oder Bächen gewinnen.

Das erfindungsgemäße Behältnis ist eine sehr gebrauchsorientierte Konstruktion, die kostengünstig herstellbar ist und einen dauerhaften und zuverlässigen Einsatz gewährleistet. Die Sonnenenergie wird eingesetzt, um kostengünstig und umweltfreundlich ein Gießbehältnis zur Verfügung zu stellen, das vielseitig genutzt werden kann.

In einer nicht dargestellten bevorzugten Ausführungsvariante des erfindungsgemäßen Behältnis sind die Fahrzeugrollen von ihrem Durchmesser her so bemessen, daß problemlos vorgegebene oder vorgebbare Stufenhöhen beim Transport des Behältnis überwunden werden können.

### Beschreibung des Solarmoduls:

Neben der Versorgung der Pumpe mit Strom für den obengenannten Anwendungsbereich steht über eine separate Anschlußbuchse die Abgabe von Solarstrom zur Verfügung.

Damit können weitere externe Stromverbraucher betrieben werden, die sonst eine eigene Solarzelleneinrichtung benötigen würden. Dies können aus heutiger Sicht zum Beispiel sein: Teichpumpen, Solarlampen, Ventilatoren, Kühltaschen, Radios, Kleinkompressoren, Akkus und viele andere im Garten- und Freizeitbereich sowie gewerbliche Anwendungen.

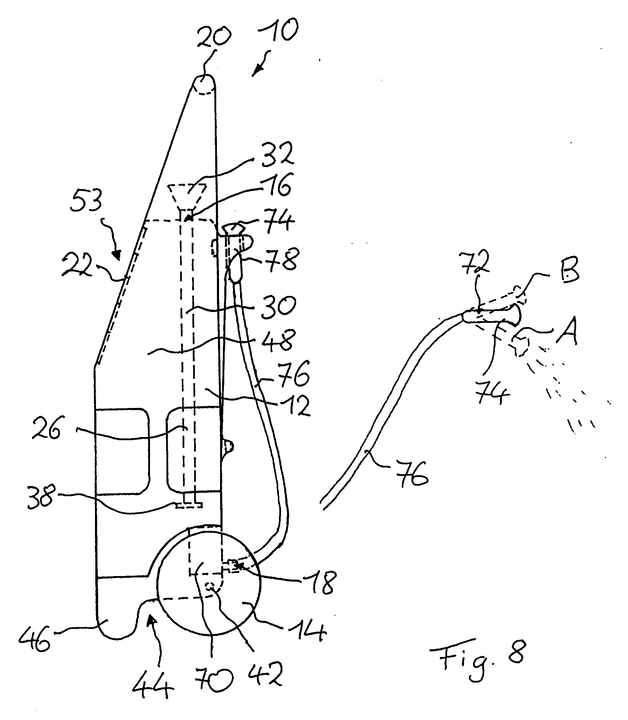

Bei dem in Fig. 8 dargestellten Behältnis 10 ist im Unterschied zu dem Behältnis gemäß Fig. 2 ein flexibler Schlauch 76 mit einem Sprühkopf 74 im unteren Bereich an das Behältnis 10 angeschlossen. Gleiche Bauteile tragen dasselbe Bezugszeichen wie die Bauteile gemäß Fig. 2 und werden nicht nochmals erläutert.

Als weiterer Unterschied ist bei der Ausführungsform gemäß Fig. 8 die Flüssigkeitspumpeneinrichtung als zweiteilige Einrichtung ausgebildet mit einer ersten Flüssigkeitspumpeneinheit 70, die im unteren Bereich im Inneren des Behältnisses 10 angeordnet ist und an die der flexible Schlauch 76 angeschlossen ist, und mit einer zweiten Flüssigkeitspumpeneinheit 72, die im Bereich der Sprühkopfes 74 vorhanden und nicht näher dargestellt ist.

Darüberhinaus ist der flexible Schlauch 76 an einer Halteeinheit 78 an dem Behältnis 10 lösbar befestigbar, wobei die Halteeinheit 78 so ausgebildet ist, daß bei befestigtem Sprühkopf 74 dieser im wesentlichen nach oben gerichtet ist.

Innerhalb des Sprühkopfes 74 ist eine in Fig. 8 nicht näher dargestellte Neigungsschalteinheit vorhanden, die die erste Flüssigkeitspumpeneinheit 70 dann schaltet, wenn der Sprühkopf 74 nach unten geneigt gehalten wird (Position A in Fig. 8; gestrichelt dargestellt). In dieser Position des Sprühkopfes wird die erste Flüssigkeitspumpeneinheit 70 mit Strom beaufschlagt und pumpt Wasser aus dem Behältnisinneren heraus. Sobald der Sprühkopf nach oben genommen wird (Position B in Fig. 8; gestrichelt dargestellt), wird die Stromzufuhr zur ersten Flüssigkeitspumpeneinheit 70 unterbrochen. Dadurch läßt sich ein angenehmer Gießvorgang bewerkstelligen, ohne daß zum Gießen beziehungsweise zum Abstellen des Wassers umständlich am Behältnis befindliche Schalteinheiten betätigt werden müssen. Darüberhinaus kann die Betätigungsposition beim Gießen in Abhängigkeit von der Länge des flexiblen Schlauches 76 entfernt vom Behältnis sein.

Das Befüllen des Behältnisses kann entweder über eine Saugpumpe oder über einen Wasserhahn durch den Trichter erfolgen. Um eine Überfüllung zu vermeiden, weist eine nicht dargestellte Ausführungsvariante eine Füllstandsanzeigeeinheit auf, durch die die Füllung beobachtet werden kann und die die jeweilige Füllmenge anzeigt.

Bei einer nicht dargestellten Ausführungsvariante ist die Solareinheit abnehmbar an dem Gehäuse angebracht. Der Standarttyp wird durch Akkumulatoren mit Strom versorgt, die bevorzugt wieder aufladbar ausgebildet sind. Die Solareinheit ist als zusätzlicher Modul lieferbar, der beispielsweise in vorgefertigte Vertiefungen am Gehäuse eingeclipst wird und zusätzlich an den Akku angeschlossen wird.

## Patentansprüche

1. Behältnis (10) zum Speichern, Transportieren und Ausbringen von Flüssigkeit, insbesondere Gießwasser oder Trinkwasser, mit
- einer Hohlkörpereinheit (12),
- unterseitig an der Hohlkörpereinheit vorhandenen Fahrzeugrollen (14),
- einer Einlaßöffnung (16),
- einer Auslaßöffnung (18) und
- einer Handhabe zum rollenden Ziehen des Behältnis (10)
**dadurch gekennzeichnet,** daß
- außenseitig an dem Behältnis eine Solarzelleneinrichtung (22) angeordnet ist,
- eine Flüssigkeitspumpeneinrichtung (24) vorhanden ist zum bedarfsweise Abpumpen oder Ansaugen der im Inneren der Hohlkörpereinheit (12) gespeicherten bzw. zu speichernden Flüssigkeit und
- die Solarzelleneinrichtung (22) ihre erzeugte elektrische Leistung zumindest teilweise an die Flüssigkeitspumpeneinrichtung (24) abgibt.

2. Behältnis nach Anspruch 1,
**dadurch gekennzeichnet,** daß
die Solarzelleneinrichtung ihre elektrische Leistung an eine Stromspeichereinheit abgibt, an die die Flüssigkeitspumpeneinrichtung angeschlossen ist.

3. Behältnis nach Anspruch 1 und/oder 2,
**dadurch gekennzeichnet,** daß
das Behältnis (10) einen Tragegriff (26) und diametral zu dem Tragegriff (26) angeordnete Gießausnehmungen (28), insbesondere im Eckbereich der Handhabe (20), vorhanden sind, so daß das Behältnis (10) wie eine Gießkanne zum Gießen benutzt werden kann.

4. Behältnis nach einem oder mehreren der vorstehenden Ansprüche,
**dadurch gekennzeichnet,** daß
im Einlaßbereich (16) ein bis zu einem Anschlag aus der Hohlkörpereinheit (12) herausziehbarer flexibler Schlauch (30) vorhanden ist.

5. Behältnis in Anspruch 4,
**dadurch gekennzeichnet,** daß
das Einfüllende des Schlauches (30) trichterförmig ausgebildet ist.

6. Behältnis nach einem oder mehreren der vorstehenden Ansprüche,
**dadurch gekennzeichnet,** daß
ein Kälteaggregat vorhanden ist, an das die Solarzelleneinheit zumindest teilweise im Bedarfsfall ihre elektrische Energie abgibt.

7. Behältnis nach einem oder mehreren der vorstehenden Ansprüche,
**dadurch gekennzeichnet,** daß
das Behältnis und/oder die Fahrzeugrollen aus Kunststoff bestehen.

8. Behältnis nach einem oder mehreren der vorstehenden Ansprüche,
**dadurch gekennzeichnet,** daß
an der Auslaßöffnung (18) eine Schlauchanschlußeinheit insbesondere zum Anschließen eines flexiblen Schlauches (34) angeordnet ist.

9. Behältnis nach einem oder mehreren der vorstehenden Ansprüche,
**dadurch gekennzeichnet,** daß
die als Griffeinheit ausgebildete Handhabe in einer Höhe vorhanden ist, in der sie von der Bedienperson problemlos ergriffen werden kann.

10. Behältnis nach einem oder mehreren der vorstehenden Ansprüche,
**dadurch gekennzeichnet,** daß
die Hohlkörpereinheit im wesentlichen eine Quaderform aufweist.

11. Behältnis nach einem oder mehreren der vorstehenden Ansprüche,
**dadurch gekennzeichnet,** daß
das Volumen der Hohlkörpereinheit (12) 20 bis 50 l (Liter), insbesondere ca. 35 l (Liter), beträgt.

12. Behältnis nach einem oder mehreren der vorstehenden Ansprüche,
**dadurch gekennzeichnet**, daß
das Behältnis eine Stromanschlußeinheit aufweist, die von der Solarzelleneinrichtung mit Strom beaufschlagt wird und an die externe Stromverbrauchseinheiten angeschlossen werden können.

13. Behältnis nach einem oder mehreren der vorstehenden Ansprüche,
**gekennzeichnet durch**
eine am Behältnis lösbar befestigbare Duscheinheit.

14. Behältnis nach einem oder mehreren der vorstehenden Ansprüche,
**dadurch gekennzeichnet,** daß
die Flüssigkeitspumpeneinrichtung eine erste Flüssigkeitspumpeneinheit (70) zum Abpumpen und eine zweite Flüssigkeitspumpeneinheit (72) zum Ansaugen aufweist.

15. Behältnis nach Anspruch 14,
**dadurch gekennzeichnet,** daß
die erste Flüssigkeitspumpeneinheit (70) in oder am Gehäuse und die zweite Flüssigkeitspumpeneinheit (72) im Bereich des freien Endes eines flexiblen, mit dem Inneren des Gehäuses kommunizierenden Schlauches (76) angeordnet ist.

16. Behältnis nach Anspruch 14 und/oder 15,
**dadurch gekennzeichnet**, daß
die Flüssigkeitspumpeneinheiten jeweils als Kreiselpumpenaggregate ausgebildet sind.

17. Behältnis nach einem oder mehreren der vorstehenden Ansprüche,
**dadurch gekennzeichnet,** daß
im Bereich des freien Endes eines mit dem Inneren des Gehäuses kommunizierenden Schlauches eine Neigungsschalteinheit vorhanden ist, wobei die Flüssigkeitspumpeneinrichtung beziehungsweise die Flüssigkeitspumpeneinheiten in Abhängigkeit der Neigung der Neigungsschalteinheit schaltbar ist beziehungsweise sind.

18. Behältnis nach dem Oberbegriff von Anspruch 1,
**dadurch gekennzeichnet,** daß
- eine Akkumulatoreneinheit vorhanden ist,
- eine Flüssigkeitspumpeneinrichtung (24) vorhanden ist zum bedarfsweise Abpumpen oder Ansaugen der im Inneren der Hohlkörpereinheit (12) gespeicherten bzw. zu speichernden Flüssigkeit und
- die Akkumulatoreneinheit ihre erzeugte elektrische Leistung zumindest teilweise an die Flüssigkeitspumpeneinrichtung (24) abgibt,
- an der Hohlkörpereinheit eine Lagereinheit zum lösbaren Befestigen einer Solarzelleneinrichtung vorhanden ist.

## Claims

1. A container (10) for storing, transporting and dispensing liquid, especially water for drinking or watering, with
- a hollow body unit (12),
- with vehicle rollers (14) present on the underside of the hollow body unit,
- with an inlet orifice (16),
- with an outlet orifice (18) and
- with a handle for pulling the container (10) by rolling,
wherein
- a solar cell device (22) is arranged on the outside of the container,
- there is a liquid pump device (24), for pumping off or sucking in, as required, the liquid stored or to be stored inside the hollow body unit (12), and
- the solar cell device (22) transmits its generated electric power at least partially to the liquid pump device (24).

2. The container as claimed in claim 1, wherein the solar cell device transmits its electric power to a current storage unit, to which the liquid pump device is connected.

3. The container as claimed in claim 1 and/or 2, wherein the container (10) has a carrying grip (26) and watering recesses (28) arranged diametrically to the carrying grip (26), especially in the corner region of the handle (20), so that the container (10) can be used as a watering can for watering.

4. The container as claimed in one or more of the preceding claims, wherein, in the inlet region (16), there is a flexible hose (30) capable of being pulled out of the hollow body unit (12) as far as a stop.

5. The container as claimed in claim 4, wherein the filling end of the hose (30) is of funnel-shaped design.

6. The container as claimed in one or more of the preceding claims, wherein there is a refrigerating assembly, to which the solar cell unit at least partially transmits its electric energy, as required.

7. The container as claimed in one or more of the preceding claims, wherein the container and/or the vehicle rollers consist of plastic.

8. The container as claimed in one or more of the preceding claims, wherein a hose connection unit, especially for connecting a flexible hose (34), is arranged at the outlet orifice (18).

9. The container as claimed in one or more of the preceding claims, wherein the handle designed as a grip unit is located at a height at which it can be grasped by the operator without difficulty.

10. The container as claimed in one or more of the preceding claims, wherein -the hollow body unit has essentially a parallelepipedic shape.

11. The container as claimed in one or more of the preceding claims, wherein the volume of the hollow body unit (12) is 20 to 50 l (liters), especially approximately 35 l (liters)

12. The container as claimed in one or more of the preceding claims, wherein the container has a current connection unit which has current applied to it by the solar cell device and to which external current consumption units can be connected.

13. The container as claimed in one or more of the preceding claims, wherein a shower unit can be fastened releasibly to the container.

14. The container as claimed in one or more of the preceding claims, wherein the liquid pump device has a first liquid pump unit (70) for pumping off and a second liquid pump unit (72) for sucking in.

15. The container as claimed in claim 14, wherein the first liquid pump unit (70) is arranged in or on the housing and the second liquid pump unit (72) is arranged in the region of the free end of the flexible hose (76) communicating with the interior of the housing.

16. The container as claimed in claim 14 and/or 15, wherein the liquid pump units are designed in each case as centrifugal pump assemblies.

17. The container as claimed in one or more of the preceding claims, wherein an inclination switch unit is present in the region of the free end of a hose communicating with the interior of the housing, the liquid pump device or the liquid pump units being capable of being switched in dependence on the inclination of the inclination switch unit.

18. The container according to the preamble of claim 1, wherein
- an accumulator unit is present,
- a liquid pump device (24) is present for pumping off or sucking in, as required, the liquid stored or to be stored inside the hollow body unit (12), and
- the accumulator unit transmits its generated electric power at least partially to the liquid pump device (24),
- a bearing unit for the releasible fastening of a solar cell device is present on the hollow body unit.

## Revendications

1. Récipient (10) pour stocker, transporter et distribuer du liquide, notamment de l'eau d'arrosage ou de l'eau potable, avec
- un ensemble de corps creux (12),
- des roues de véhicule (14) présentes sur le dessous de l'ensemble de corps creux,
- une ouverture d'admission (16),
- une ouverture d'évacuation (18) et
- une poignée de traction, pour tirer le récipient (10) en le faisant rouler,
**caractérisé** en ce que
- un dispositif (22) à cellules solaires est disposé extérieurement sur le récipient,
- un dispositif (24) de pompage de liquide est présent pour, selon les besoins évacuer ou aspirer le liquide emmagasiné ou, respectivement, à emmagasiner dans l'ensemble de corps creux (12), et
- le dispositif (22) à cellules solaires délivre au moins une partie de l'énergie électrique qu'il produit au dispositif (24) de pompage de liquide.

2. Récipient selon la revendication 1, **caractérisé** en ce que le dispositif à cellules solaires délivre son énergie d'électrique à une unité d'accumulation de courant, à laquelle est raccordé le dispositif de pompage de liquide.

3. Récipient selon la revendication 1 et/ou 2, **caractérisé** en ce que le récipient (10) présente une poignée porteuse (26) et des orifices d'arrosage (28) disposés en étant diamétralement opposés à la poignée porteuse (26), notamment dans la région de coin de la poignée de traction (20), de sorte que le récipient (10) peut être utilisé pour arroser comme un arrosoir.

4. Récipient selon une ou plusieurs des revendications précédentes, **caractérisé** en ce qu'un tuyau souple (30), qui peut être extrait de l'ensemble de corps creux (12) jusqu'à une butée, est présent dans la région d'admission (16).

5. Récipient selon la revendication 4, **caractérisé** en ce que l'extrémité de remplissage du tuyau souple (30) est configurée en entonnoir.

6. Récipient selon une ou plusieurs des revendications précédentes, **caractérisé** par la présence d'un équipement de refroidissement, auquel le dispositif à cellules solaires délivre en cas de besoin au moins une partie de son énergie électrique.

7. Récipient selon une ou plusieurs des revendications précédentes, **caractérisé** en ce que le récipient et/ou les roues de véhicule sont réalisés en matière plastique.

8. Récipient selon une ou plusieurs des revendications précédentes, **caractérisé** en ce qu'un dispositif de raccordement de tuyau, notamment pour le raccordement d'un tuyau souple (34), est disposé à l'ouverture d'évacuation (18).

9. Récipient selon une ou plusieurs des revendications précédentes, **caractérisé** en ce que la poignée de traction, conçue comme dispositif de préhension, est présente à une hauteur qui lui permet d'être saisie sans problème par l'utilisateur.

10. Récipient selon une ou plusieurs des revendications précédentes, **caractérisé** en ce que l'ensemble de corps creux présente essentiellement une forme parallélépipédique.

11. Récipient selon une ou plusieurs des revendications précédentes, **caractérisé** en ce que l'ensemble de corps creux (12) a une contenance de 20 à 50 l (litres), notamment d'environ 35 l (litres).

12. Récipient selon une ou plusieurs des revendications précédentes, **caractérisé** en ce que le récipient présente un dispositif de raccordement électrique, qui est alimenté en courant par le dispositif à cellules solaires et auquel peuvent être raccordés des équipements consommateurs de courant externes.

13. Récipient selon une ou plusieurs des revendications précédentes, **caractérisé** par un ensemble de douche pouvant être fixé de manière détachable sur le récipient.

14. Récipient selon une ou plusieurs des revendications précédentes, **caractérisé** en ce que le dispositif de pompage de liquide présente une première unité de pompage de liquide (70) pour l'évacuation et une deuxième unité de pompage de liquide (72) pour l'aspiration.

15. Récipient selon la revendication 14, **caractérisé** en ce que la première unité de pompage de liquide (70) est disposée dans ou sur le boîtier, et la deuxième unité de pompage de liquide (72) est disposée dans la région de l'extrémité libre d'un tuyau souple (76) communiquant avec l'intérieur du boîtier.

16. Récipient selon la revendication 14 et/ou 15, **caractérisé** en ce que les unités de pompage de liquide sont respectivement réalisées sous forme d'ensembles de pompe centrifuge.

17. Récipient selon une ou plusieurs des revendications précédentes, **caractérisé** en ce qu'un ensemble de déclencheur par inclinaison est présent dans la région de l'extrémité libre d'un tuyau souple communiquant avec l'intérieur du boîtier, le dispositif de pompage de liquide ou, selon le cas, les unités de pompage de liquide pouvant être déclenché(es) en fonction de l'inclinaison de l'ensemble de déclencheur par inclinaison.

18. Récipient selon le préambule de la revendication 1, **caractérisé** en ce que
- un ensemble d'accumulateurs est présent,
- un dispositif (24) de pompage de liquide est présent pour, selon les besoins évacuer ou aspirer le liquide emmagasiné ou, respectivement, à emmagasiner dans l'ensemble de corps creux (12), et
- l'ensemble d'accumulateurs délivre au moins une partie de l'énergie électrique qu'il produit au dispositif (24) de pompage de liquide,
- un support de montage est présent sur l'ensemble de corps creux pour la fixation détachable d'un dispositif à cellules solaires.
